(19) Europäisches Patentamt
European Patent Office
Office européen des brevets

(11) EP 3 258 188 A1

(12) EUROPEAN PATENT APPLICATION

(43) Date of publication:
20.12.2017 Bulletin 2017/51

(51) Int Cl.:
F25B 21/00 (2006.01)  F25B 23/00 (2006.01)
F28D 15/02 (2006.01)

(21) Application number: 16174388.5

(22) Date of filing: 14.06.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Nederlandse Organisatie voor
toegepast-
natuurwetenschappelijk onderzoek TNO
2595 DA 's-Gravenhage (NL)

(72) Inventors:
• Oversloot, Hendrik Pieter
2595 DA 's-Gravenhage (NL)
• Finck, Christian Johannes
2595 DA 's-Gravenhage (NL)
• de Jong, Adriaan Jan
2595 DA 's-Gravenhage (NL)
• Anastasopol, Anca
2595 DA 's-Gravenhage (NL)

(74) Representative: V.O.
P.O. Box 87930
Carnegieplein 5
2508 DH Den Haag (NL)

(54) METHOD OF HEAT EXCHANGE AND HEAT EXCHANGING MODULE

(57) The invention is directed to a method of heat exchange, to a heat exchanging module, and to a cooling or heating device.

The heat exchanging method of the invention comprises:
- magnetising or demagnetising a magnetocaloric material so as to change the temperature of a first heat transfer fluid that is in heat exchanging contact with the magnetocaloric material,
- using the temperature change of the first heat transfer fluid to create a flow of first heat transfer fluid between the magnetocaloric material and a separation wall and thereby changing the temperature of the separation wall;
- contacting a second heat transfer fluid with the separation wall and thereby changing the temperature of the second heat transfer fluid,
wherein the separation wall defines at least part of a wall of a closed container comprising the magnetocaloric material and the first heat transfer fluid, wherein the second heat transfer fluid is in heat exchanging contact with surface of the separation wall at the exterior of the closed container, and wherein said closed container is under a vacuum limited to the vapour pressure of the first heat transfer liquid.

Figure 2

**Description**

The invention is directed to a method of heat exchange, to a heat exchanging module, and to a cooling or heating device.

Magnetic refrigeration is a promising technology that may overcome some of the environmental and technical limitations of the conventional refrigeration systems. It is based on the magnetocaloric effect. This phenomenon has been known since the beginning of the nineteenth century. The magnetocaloric effect is based on the decrease and increase in magnetic entropy of a magnetic material when it is placed into and out of an external magnetic field. More in particular, a magnetocaloric effect is caused from the magnetisation or demagnetisation of a magnetic material, preferably a material with a transition from a ferromagnetic to a paramagnetic phase (such as a transition metal or a lanthanide rare earth element). When subjected to an external magnetic field, electron spins inside the material are lined-up which causes the reduction of the magnetic entropy of the material, resulting in an exothermal phenomenon due to the reduced randomness of the magnetic dipole arrangements. As a result, the temperature of the material increases. The phenomenon is most pronounced for ferromagnetic materials near the Curie temperature, i.e. the transition temperature between ferromagnetic and paramagnetic behaviour.

Magnetisation/demagnetisation may be done isothermally or adiabatically. In case of the isothermal (de)magnetisation, the following relation for the entropy change holds:

$$(\Delta S_M)_T = \mu_0 \int_{H_i}^{H_f} \left(\frac{\partial M}{\partial T}\right)_H dH \tag{1}$$

In case of adiabatic (de)magnetisation, the following relation for the temperature change holds:

$$(\Delta T_{ad})_S = \mu_0 \int_{H_i}^{H_f} \frac{T}{C_H} \left(\frac{\partial M}{\partial T}\right)_H dH \tag{2}$$

In equations (1) and (2), $\mu_0$ is the magnetic permeability of vacuum, $C_H$ is the heat capacity at constant magnetic field and $\left(\frac{\partial M}{\partial T}\right)_H$ is the derivative of the magnetisation with respect to temperature, at constant field (Pecharsky et al., Int. J. Refrig. 2006, 29(8), 1239-2149).

Use of the magnetocaloric effect as a basis for refrigeration systems has been known for many years. The concept involved is to extract heat from the magnetocaloric material while it is magnetised and at an increased temperature, and then to demagnetise the material, causing the temperature to drop. While the temperature is low, heat is transferred from an object to be cooled to the magnetocaloric material. The magnetocaloric material is then magnetised again, increasing the temperature back to a high level, providing for extraction of heat and rejection of it to a heat sink. Upon repetition of this cycle, heat is transferred from a low temperature to a higher temperature.

Thus, the magnetisation/demagnetisation of the magnetocaloric material in a magnetic refrigerator is analogue to the expansion/compression of a gas in a conventional refrigerator. Therefore, depending on the way the magnetisation is performed, thermodynamic cycles can be used.

Magnetic refrigerators can use regenerative thermodynamic cycles that can either be adiabatic (Brayton cycle) or isothermal (Ericsson cycle). During an adiabatic process, the temperature of the system is increased and reduced. During an isothermal process, the temperature is kept constant while the material exchanges heat with its surroundings. The adiabatic thermodynamic cycle is the most used for magnetic refrigeration.

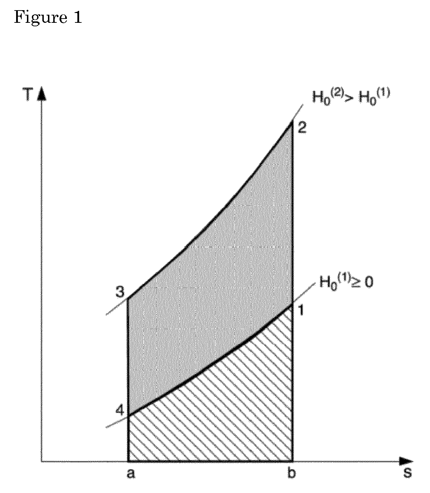

A schematic representation of a Brayton cycle is given in figure 1 (Kitanovski et al., Int. J. Refrig. 2006, 29(1), 3-21) formed of two isomagnetic (2-3 and 4-1) curves and two adiabatic curves (1-2 and 3-4). The steps of the Brayton cycle are the following.

1-2: Adiabatic magnetisation: When magnetocaloric material is placed in an external and constant magnetic field, without heat exchange with the environment (adiabatic), the total entropy remains constant, but a decrease in magnetic entropy leads to an increase in temperature.

2-3: At the higher temperature, the field is kept constant and heat can be removed from the magnetocaloric material.

3-4: Adiabatic demagnetisation: When the external magnetic field is removed, without heat exchange to the environment (adiabatic), the total entropy remains again constant but an increase in the magnetic entropy leads to a decrease in temperature of the magnetocaloric material.

4-1: At the lower temperature and the external magnetic field turned off, heat can be absorbed from the device that needs to be cooled.

A magnetic refrigerator is normally composed of the following elements: the magnetocaloric working body, the magnetisation system, hot and cold heat exchangers, a heat transfer fluid and a flow system.

Following the Brayton cycle described above, a conventional magnetic refrigeration device will work according to the steps described below.

1. The magnetic body is magnetised adiabatically by increasing the field from 0 to a given strength *H* with no flow. This leads to an increase in temperature (1-2 in figure 1).
2. The fluid then circulates from the cold reservoir towards the hot reservoir. As the temperature of the body increases, the temperature of the fluid will increase beyond the temperature of the hot reservoir and then decrease to the equilibrium temperature (2-3 in figure 1).
3. By reducing the magnetic field from given strength *H* to 0 with no flow, the working body is demagnetised adiabatically. This leads to a decrease in temperature below the equilibrium temperature (3-4 in figure 1).
4. The fluid is then forced by the displacer to move from the hot to the cold reservoir. When it enters the working body, the fluid temperature is equal to the temperature of the hot reservoir and it drops to a temperature below the temperature of the cold reservoir. Upon entering the heat exchanger, the fluid absorbs heat at a rate that determines the refrigeration power. The rate of cooling is directly proportional to the mass flow rate, the specific heat of the fluid and the temperature difference (4-1 in figure 1).

From the thermodynamic cycle described above, it is obvious that the heat exchange between the magnetocaloric material and the rest of the refrigeration device is a critical component in determining the efficiency of the system. Conventionally, the magnetocaloric material does not act as a heat exchanger itself. Therefore, a fluid is necessary to transfer the heat to the cold and hot reservoirs and in this way to close the thermodynamic cycle. Typically, prototypes of refrigeration devices use water as heat exchange fluid. Other fluids used are ethyl alcohol/water or ethanol/water mixtures, and alkalescent water solutions. Also gases are used as heat transfer fluids, such as nitrogen gas, helium gas, or air. More exotic heat transfer fluids include ferrofluids.

One of the main difficulties of using magnetic refrigeration is that the refrigerant is a solid material represented by the magnetocaloric material. This implies that a heat exchanger with a heat transfer fluid needs to be introduced in the system. For a heat exchanger using a liquid working fluid, typical heat transfer coefficients are in the order of a few hundred W/m$^2$K. For heat pipes, based on condensation and evaporation heat transfer, heat transfer coefficients can be higher by an order of magnitude (Smith et al, "Fysische Transportverschijnselen I", Delftse Uitgevers Maatschappij, Delft, 1984). For the invention, the aim was to optimise heat transfer with the magnetocaloric material by internal heat pipe transfer, *i.e.* with a condensing and evaporating fluid in direct contact with the magnetocaloric material.

Some attempts have been made in the prior art to meet these challenges and improve magnetocaloric refrigeration devices. US-A-2004/0 182 086, for instance, discloses a magnetocaloric refrigeration device which is provided with heat pipes. When a controllable magnetic field is removed to allow heat absorption of the magnetocaloric working unit, the heat is subsequently transferred upward to the magnetocaloric working unit through a first evaporation portion and a first condensation portion via flow of a working medium through a first heat pipe. When the controllable magnetic field is applied on the magnetocaloric working unit to release heat, the heat is transferred to a second evaporation portion of a second heat pipe, and further to the outside through a second condensation portion via flowing of the working medium.

US-A-4 642 994 describes a magnetic refrigeration apparatus which comprises at least two directional heat pipes, one such pipe disposed between a heat transfer fluid and the object of cooling wherein heat from the object of cooling is transmitted through said fluid to the magnetic material when said magnetic material absorbs heat, and another such pipe disposed between the heat transfer fluid and an external heat sink wherein heat from the magnetic material when said magnetic material is rejecting heat is transmitted through the heat transfer fluid to the external heat sink, and wherein the heat from the hot ends of the directional heat pipes is minimally transmitted to the cold ends of the directional heat pipes.

US-B-6 446 441 discloses a magnetic refrigerator which includes on its high temperature side a thermal diode module comprising a hermetically sealed container having an evaporator end and a condenser end, along with a heat transfer fluid for cycling between evaporation and condensation. At its evaporator end, and within the container, the module has an array of a magnetocaloric material disposed in the form of solid, porous matrix derived from finely divided particles and arranged for coming into direct physical contact with the heat transfer fluid during the high-temperature portion of the cycle. In this refrigerator the evaporator and condenser part are strongly separated. The system has to be operated at relatively high temperature.

There remains a need in the art for improving the efficiency of heat exchanging devices using the magnetocaloric effect. An objective of the invention is to fulfil this need in the art.

The inventors surprisingly found that this objective can be met, at least in part, by a method of heat exchange in which the magnetocaloric effect and heat exchange are integrated in a closed system.

Accordingly, in a first aspect the invention is directed to a method of heat exchange, comprising

- magnetising or demagnetising a magnetocaloric material so as to change the temperature of a first heat transfer fluid that is in heat exchanging contact with the magnetocaloric material,
- using the temperature change of the first heat transfer fluid to create a flow of first heat transfer fluid between the magnetocaloric material and a separation wall and thereby changing the temperature of the separation wall;
- contacting a second heat transfer fluid with the separation wall and thereby changing the temperature of the second heat transfer fluid, wherein the separation wall defines at least part of a wall of a closed container comprising the magnetocaloric material and the first heat transfer fluid, wherein the second heat transfer fluid is in heat exchanging contact with surface of the separation wall at the exterior of the closed container, and wherein said closed container is under a vacuum limited to the vapour pressure of the first heat transfer liquid.

In a further aspect, the invention is directed to a heat exchanging module, preferably for performing a method according to the invention, comprising a closed container comprising a magnetocaloric material in heat exchanging contact with a first heat transfer liquid, said closed container having a wall, wherein a separation wall defines at least part of said wall, wherein said container is under a vacuum limited to the vapour pressure of the first heat transfer liquid.

In yet a further aspect, the invention is directed to a cooling or heating device comprising a heat exchanging module according to the invention.

The invention can diminish the shortcomings of the heat exchange system in a conventional magnetic refrigerator by enhancing heat transfer between the magnetocaloric material and the rest of the device. The invention allows a more compact device. Additionally, vibrations and noise are significantly reduced. Moreover, heat transfer is more efficient that in conventional heat exchangers. The use of a closed system has an additional advantage of providing design versatility.

In the method of the invention, the flow of first heat transfer fluid between the magnetocaloric material and the separation wall preferably comprises evaporation and/or condensation of first heat transfer fluid. Typically, upon magnetisation of the magnetocaloric material first heat transfer fluid will evaporate at the magnetocaloric material and condense at the separation wall, and upon demagnetisation of the magnetocaloric material first heat transfer fluid will evaporate at the separation wall and condense at the magnetocaloric material.

Suitably, the first heat transfer liquid is chemically inert to the material of the separation wall and to the magnetocaloric material. The first heat transfer fluid is preferably stable in the temperature and pressure range of operation. For the first heat transfer fluid, suitable values of the surface tension are 0.070 N/m or less, preferably 0.050 N/m or less, more preferably 0.020-0.045 N/m. For instance, for operation around 20 °C, the first heat transfer fluid may comprise one or more selected from the group consisting of acetone, methanol, ethanol, and hydrochlorofluorocarbons (such as $CF_3CHCl_2$, $CH_3CCl_2F$, $CF_3CF_2CHCl_2$, and $CClF_2CF_2CHClF$). Preferably, the first heat transfer fluid comprises one or more selected from acetone, methanol and ethanol.

Preferably, the heat exchanging contact between the first heat transfer fluid and the magnetocaloric material comprises wetting of the magnetocaloric material through capillary forces. The use of capillary action allows avoiding surface drying and delivering the liquid to the active evaporation zone. Capillary forces can be realised by structuring the surface of the magnetocaloric material. Such structuring may, for example, involve using plates of magnetocaloric material between which plates capillary action is possible. It may also involve the provision of grooves (such as V shaped grooves) in the magnetocaloric material, thereby increasing the surface area of the magnetocaloric material. The use of porous and/or powder magnetocaloric material is also possible to induce capillary action. Combinations of such structuring are also possible.

The magnetocaloric material preferably has a high surface area to augment the heat exchanging contact with the first heat transfer fluid, thereby making the heat transfer more efficient. Suitably, the magnetocaloric material is physically separated from the separation wall. The magnetocaloric material is suitably chemically inert to the first heat transfer fluid. It is preferred that the magnetocaloric material has a single Curie temperature. The magnetocaloric material can, for instance, comprise an alloy of Gd, Si, and Ge at a composition ratio of $Gd_5(Si_xGe_{1-x})_4$, wherein x is optionally selected in order to adjust the magnetocaloric intensity of the alloy. Typically, x is in the range of 0-0.5, such as in the range of 0.2-0.5. The magnetocaloric material can also comprise other materials including GdNi, $Gd_5(Si_2)$, $Gd_3Ga_5O_{12}$, and GdPd, or other specially engineered materials with a giant magnetocaloric effect (GMCE) including but not limited to alloys such as $Mn_xFe_yB_zSi_pGe_qPr$ or $La(Fe,Si,Mn)_xH_y$.

The magnetocaloric material is preferably present in the form of a stack of parallel plates. The distance between the individual plates can be in the range of 0.2-10 mm, such as in the range of 0.5-5 mm, or in the range of 0.7-3 mm.

Suitably, the separation wall is chemically inert to the first heat transfer fluid. The separation wall is suitably physically separated from the magnetocaloric material. It is preferred that the separation wall has a specific heat capacity at of 800 J/kg·K or less at operating temperature, preferably 600 J/kg·K or less, more preferably 100-450 J/kg·K. Preferred materials for the separation wall, for example, include copper and copper alloys (brass, bronze), zinc and zamac alloys (family of alloys with a base metal of zinc and alloying elements of aluminium, magnesium, and copper).

In accordance with the invention, the magnetocaloric material and the first heat transfer liquid are comprised in a closed container, which closed container is under a vacuum that is limited to the vapour pressure of the first heat transfer liquid. For example, at 20 °C, acetone has a vapour pressure of 240 mbar, methanol has a vapour pressure of 100 mbar, ethanol has a vapour pressure of 30 mbar, and water has a vapour pressure of 23 mbar. Because the entire system is operated under vacuum, a pressure difference is created between the space around the magnetocaloric material and the vapour created by the evaporation of first heat transfer liquid. This pressure difference serves as a driving force for liquid transfer from the warm to the cold spot. By switching the magnetic field on and off, the change in temperature in the magnetocaloric material is transferred to the separation wall by the flow of first heat transfer liquid. But in order for this to be possible, the entire integrated magnetocaloric material heat exchanger system should be operated under vacuum at saturation conditions of the first heat transfer liquid (thus not overfill of underfill with heat transfer liquid).

In operation, the method of the invention follows a Brayton cycle as shown in figure 1. Hence, the method of the invention includes a method of heat exchange comprising

- magnetising the magnetocaloric material so as to increase the temperature of the first heat transfer fluid,
- creating a flow of first heat transfer fluid from the magnetocaloric material towards the separation wall and thereby decreasing the temperature of the separation wall;
- contacting the second heat transfer fluid with the separation wall and thereby decreasing the temperature of the second heat transfer fluid.

The method of the invention also includes a method of heat exchange comprising

- demagnetising the magnetocaloric material so as to decrease the temperature of the first heat transfer fluid,
- creating a flow of first heat transfer fluid from the separation wall towards the magnetocaloric material and thereby increasing the temperature of the separation wall,
- contacting the second heat transfer fluid with the separation wall and thereby increasing the temperature of the second heat transfer fluid.

Second heat transfer fluid may suitably comprise one or more selected from water, ethanol, methanol, acetone, ammonia, and nitrogen. Preferably, the second heat transfer fluid comprises water. In an embodiment, the second heat transfer fluid comprises water and one or more fouling and/or corrosion inhibitors.

Preferably, the magnetocaloric material is wetted by first heat transfer fluid and is enclosed in a container or casing of a material that is chemically inert to the first heat transfer fluid.

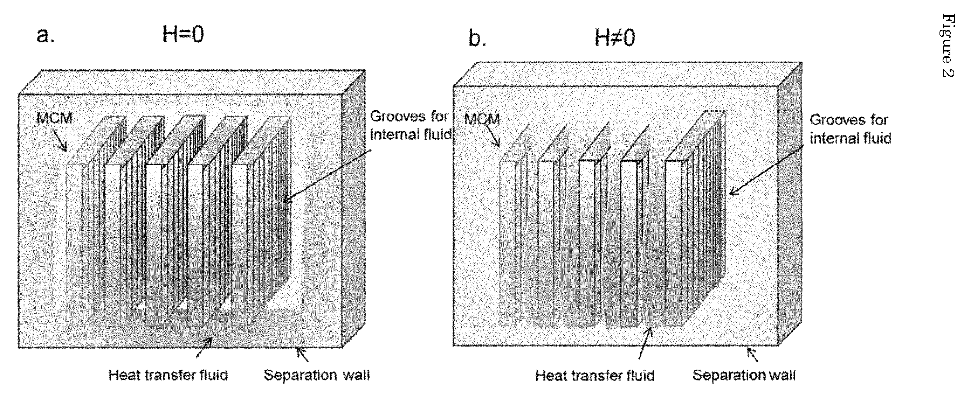

The invention is schematically represented in the exemplary embodiment shown in figure 2. Figure 2a shows the magnetisation of magnetocaloric material, which leads to an increase in the temperature. First heat transfer fluid evaporates from the surface of the magnetocaloric material and condenses on the separation wall. Figure 2b shows demagnetisation of magnetocaloric material, which leads to a decrease of the temperature. First heat transfer fluid condenses on the magnetocaloric material. The first heat transfer fluid covers the magnetocaloric plates as a wet thin film.

Efficient transfer of heat generated by the magnetocaloric effect may be achieved by evaporating a liquid from the surface of the magnetocaloric material and condensation on the separation wall. The efficiency of heat transfer becomes even higher by using an increased surface area of the magnetocaloric material.

For a better understanding of the invention, the working of the integrated magnetocaloric material heat exchanger is described in the cases of a Brayton cycle (adiabatic magnetisation). An exemplary working of an embodiment of the integrated magnetocaloric material heat exchanger in a regenerative thermodynamic cycle is give below in a sequence of four steps.

1. The external magnetic field is switched from 0 to a given strength $H$. The active magnetocaloric material has a decrease in magnetic entropy. However, as the total entropy of the system remains constant (second law of thermodynamics), an increase in the temperature of the magnetocaloric material occurs. First heat transfer liquid present as a thin film on the surface of the magnetocaloric material will evaporate.

2. The pressure difference between the vapour created at the surface of the magnetocaloric material and the surrounding vacuum creates a driving force for vapour transfer. Hot vapour flows towards the cold separation wall where it condenses. The temperature of the separation wall increases. A second heat transfer fluid at the outside wall can remove the heat from the outside wall.

3. The external magnetic field is switched from given strength $H$ to 0. The active magnetocaloric material has an increase in magnetic entropy. As the total entropy of the system remains constant, a decrease of temperature occurs at the surface of the magnetocaloric material.

4. The temperature difference between the cold magnetocaloric material and the hot separation wall, creates a flow of first heat transfer fluid towards the magnetocaloric material.

For further enhancing the efficiency of heat transfer by improving liquid transport the following aspects are important: wetting of the magnetocaloric material and the separation wall with first heat transfer liquid, and spreading of first heat transfer liquid on the surface of the magnetocaloric material and the separation wall.

Good wetting may be achieved by using a carefully selected magnetocaloric material and first heat transfer liquid. Suitably, wetting can be achieved when the dielectric properties of the magnetocaloric material and the first heat transfer liquid give a large and negative Hamaker constant (Plawsky et al., Nanosc. Microsc. Therm. 2014, 18, 251-269). Also nanostructuring of the surfaces of the magnetocaloric material and/or the separation wall can lead to desired dielectric properties that the bulk materials do not present.

Capillary action may be used to provide a desirable spreading of first heat transfer liquid on the surface of the magnetocaloric material and/or the separation wall. In order to achieve a good spreading of the first heat transfer liquid on the surface of magnetocaloric materials a structuring may be applied. For examples, the magnetocaloric material may be present in the form of plates that contain grooves (such as V shaped grooves), which augment the surface area of the plates and promote the liquid flow by capillary action. The capillary action is a result of the adhesion of the liquid to the solid surface and the surface tension of the liquid on the one hand and the gravitational force on the other hand. The height *h* achieved by a liquid by capillary action is given by equation (4):

$$h = \frac{2\gamma \cos\theta}{\rho g r} \qquad (4)$$

wherein *y* is the surface tension, θ is the contact angle, *p* is the density of the liquid, *g* is the gravity, and *r* is the radius of the tube. Thus, using the capillary action to wet the magnetocaloric material brings some constraints in the properties of the liquid such as density and surface tension.

In the schematic of figure 2, the magnetocaloric material is represented as thin plates placed vertical and wetted by first heat transfer fluid. However, the principle of transferring heat by flow of first heat transfer fluid (such as evaporation/condensation) may be applied to any porous structure of magnetocaloric material.

The heat exchanging module of the invention is preferably used for performing the method of the invention. The module comprises a closed container comprising a magnetocaloric material in heat exchanging contact with a first heat transfer liquid, said closed container having a wall, wherein a separation wall defines at least part of said wall, wherein said container is under a vacuum limited to the vapour pressure of the first heat transfer liquid.

First heat transfer liquid present in the container of the heat exchanging module may be first heat transfer liquid as described above, and can thus comprise one or more selected from the group consisting of acetone, methanol, ethanol, , and hydrochlorofluorocarbons (such as $CF_3CHCl_2$, $CH_3CCl_2F$, $CF_3CF_2CHCl_2$, and $CClF_2CF_2CHClF$). Preferably, the first heat transfer fluid comprises one or more selected from acetone, methanol and ethanol.

The magnetocaloric material in the heat exchanging module of the invention may be present in the form of plates (preferably a stack of parallel plates) or powder. Preferably, the magnetocaloric material is present in the form of plates having capillary grooves. When using magnetocaloric material in the form of a powder, it may be necessary to reinforce the magnetocaloric material to create a stable material with respect to the magnetic forces on the particles. Such reinforcement may be provided by mixing the powder with e.g. epoxy to create a solid mass. A three-dimensional printing process would allow structuring the magnetocaloric material in layers, thereby creating paths for liquid and vapour in the same process.

The invention also provides a cooling or heating device comprising a heat exchanging module as described herein. Such a device can, for instance, be a magnetocaloric refrigeration device.

The invention is also intended to be used for the reverse process, transforming heat in to work or electric power, such as a magnetocaloric heat-to power device (WO 2014064186 and Heiniger et al., "Industrietauglicher Prototyp eines thermomagnetischen Motors (TMM) zur Stromerzeugung - Schlussbericht" 2015, Schweizerische Eidgenossenschaft, Bundesamt fur Energie).

The invention has been described by reference to various embodiments, compositions and methods. The skilled person understands that features of various embodiments, compositions and methods can be combined with each other. For instance, preferred coating compositions can be used in the various methods, in the same way preferred steps of a method can be combined with each other and with preferred coating compositions.

All references cited herein are hereby completely incorporated by reference to the same extent as if each reference were individually and specifically indicated to be incorporated by reference and were set forth in its entirety herein.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (*i.e.*, meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (*e.g.*, "such as") provided herein, is intended merely to better illuminate the invention and does not pose a limitation on the scope of the invention unless otherwise claimed. No language in the specification should be construed as indicating any non-claimed element as essential to the practice of the invention. For the purpose of the description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

Preferred embodiments of this invention are described herein. Variation of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject-matter recited in the claims appended hereto as permitted by applicable law. Moreover, any combination of the above-described elements in all possible variations thereof is encompassed by the invention unless otherwise indicated herein or otherwise clearly contradicted by context. The claims are to be construed to include alternative embodiments to the extent permitted by the prior art.

For the purpose of clarity and a concise description features are described herein as part of the same or separate embodiments, however, it will be appreciated that the scope of the invention may include embodiments having combinations of all or some of the features described.

The invention will now be further illustrated by the following non-limiting examples.

Examples

*Example 1: Experimental set up Gd in the heat pipe and first tests with water*

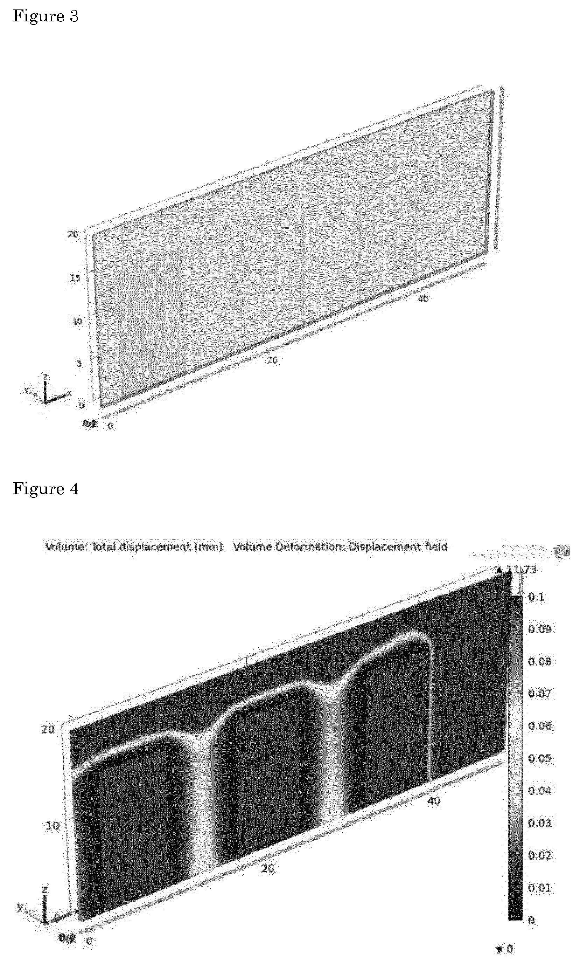

Figure 3 (Comsol-drawing of three Gd plates between two copper walls of 0.1 mm thickness) shows a first approach of three Gd plates 7.5 mm wide, height 15 mm and distance between the plates 7.5 mm, as well as 0.1 mm copper foil outside. Figure 4 shows the corresponding stress analysis (Comsol-stress analysis, total displacement in mm, three Gd plates between two copper walls of 0.1 mm thickness).

At a pressure difference of 1 bar (outside - inside heat pipe) the maximum deformation of the copper wall between the plates does not increase more than 0.06 mm. This means that by the use of 1 mm thickness Gd plates the distance between both copper walls is not smaller than 0.88 mm. This should be good enough for the heat transfer medium (refrigerant).

Based on the results of the stress simulation (figure 4), a heat pipe was built, see photo in figure 5. The heat pipe of figure 5 is a "bag" of copper foil containing a copper plate with a single stack of Gd plates, similar to the stacks shown in figure 8. The wrappers were folded from flat sheet and then sealed with solder along the edges. The dimensions of the heat pipe were 45 mm wide and 60 mm height, consisting of Gd plates at the bottom 40 mm height, 1 mm thickness, 7.5 mm wide and a distance of 7.5 mm between each plate. The Gd plates showed a rough and therefore reasonable surface appearance which should allow boiling. The upper part (residual 20 mm height) was filled with 2 layers of 0.5 mm copper mesh to hold structural stability and to provide condensation on the top.

The lower part with plates should work first as evaporator and the upper part consisting of copper mesh as condenser. This means that only the part with the Gd plates should be magnetised and the top should be free to extract the energy somehow and for this reason not within the magnetic field. A small amount of water around 0.5 ml was added into the assembly before connected to the test rig which consisted of a vacuum pump, valves and a pressure gauge. After decreasing the pressure the valve was closed and the entire heat pipe was moved into the magnetic field. The strength of the field was between 0.7-1 Tesla, depending on the gap width. Most experiments were done at 0.9 Tesla.

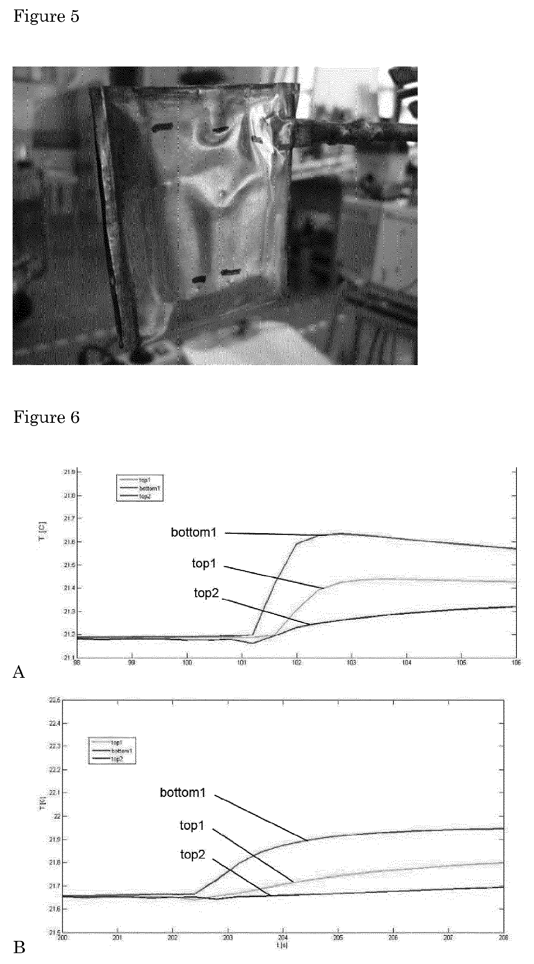

Figure 6A shows the experimental results - three Gd plates, refrigerant water, sub-atmospheric pressure). At two points temperatures were measured, the line indicated by bottom1 determines the bottom temperature located outside on the copper foil between the sheets and the blue and green line the top of the heat pipe (also outside on the copper foil).

Figure 6A shows a fast temperature change of 0.45 K at the bottom and of 0.25 K within 1 s on the top. Operation temperatures were always near 20 °C, the Curie temperature of Gd. The line indicated with top2 showed no reasonable temperature change for both situations so that maybe the position of the sensor was chosen wrongly.

Figure 6B gives a reference with the same amount of water but atmospheric pressure, so there is no evaporation at the same temperature level. The temperature increase is much smaller in the same amount of time. There is only heat conductivity as the driving force. This shows that the system of figure 6A worked by evaporation and condensation.

The temperature difference at the top of the heat pipe is still relatively low. This is based on the mass relation of copper and gadolinium. The three Gd plates provided an amount of heat of 3 J by 1.7 K temperature difference. A heat pipe with, for instance, 5 g copper needs already 1 J for heating up the copper with a temperature difference of 0.5 K. There was still room for improvement by increasing the amount of gadolinium, which required a change of the internal structure.

*Example 2: Experimental set up and tests by changing internal geometry and refrigerant*

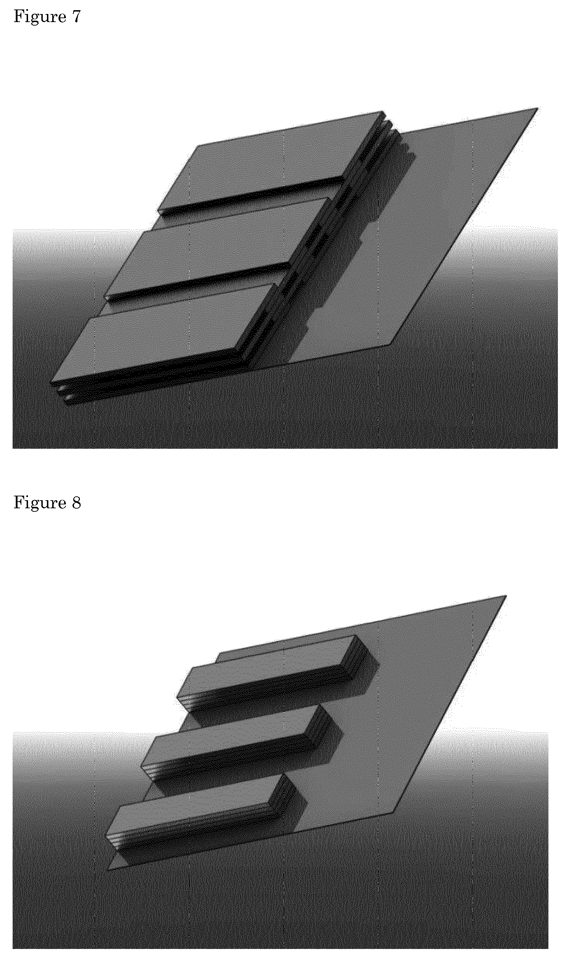

In a first experiment more Gd plates were used in the heat pipe by stacking of plates which overlapped each other (see figure 7). Three packs of four times 15 mm × 40 mm × 1 mm (width × height × thickness). Between the plates was a space of 1 mm × 5 mm.

The heat pipe was built, filled, closed and tested with water. In this case the heat pipe did not work with water. The thoughts came up that there is not enough space between the sheets which should allow the water to run through. To further examine this, a heat pipe was built with much more space between the Gd plates (see figure 8). Three packs of four times 7.5 mm × 40 mm × 1 mm plates with 10 mm distance between the plates.

As expected, the heat pipe worked with fast temperature change at the bottom and top but no reasonable delta T with more than 0.3 K at the top.

So on one hand a small space between the plates did not work with water. After filling with some drops the water could not run between the plates which avoided the evaporation and a fast heat transfer. On the other hand a big gap between the packs of Gd worked with water. The reason for this was found in the relatively high surface tension of water (0.072 N/m at 20 °C). Acetone and ethanol would be suitable refrigerants with a lower surface tension (surface tension acetone at 20 °C is 0.025 N/m; surface tension ethanol at 20 °C is 0.022 N/m).

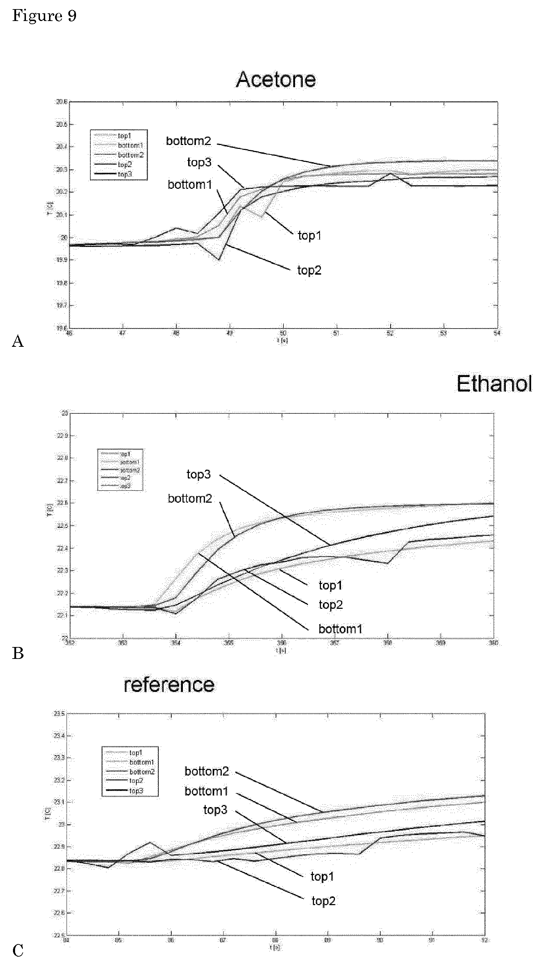

Tests with acetone and ethanol in the internal structure were performed. Both refrigerants worked for both systems, but acetone showed a faster and bigger temperature change (at the top), see figure 9.

For both acetone and ethanol the internal system of overlapping Gd plates (figure 7) did not show better results than the one with the bigger gap (figure 8), probably because the refrigerant could not reach the gaps in between. While filling with acetone or ethanol the refrigerant flows down on the wall and filled only the gaps outside. This gave the idea of installing the plates 90° rotated to the previous systems.

*Example 3: Final internal geometry experimental results, additional use of capillary effect (including tests)*

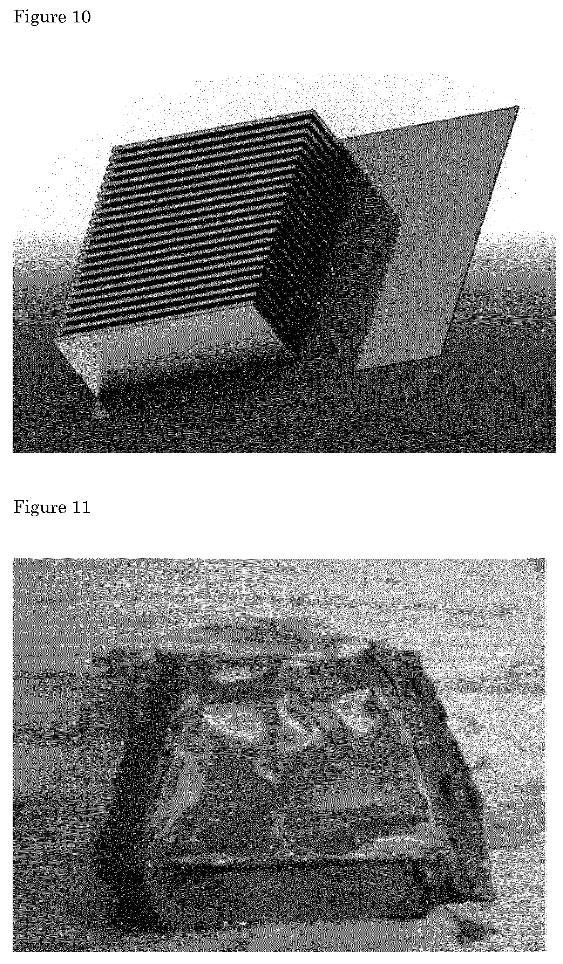

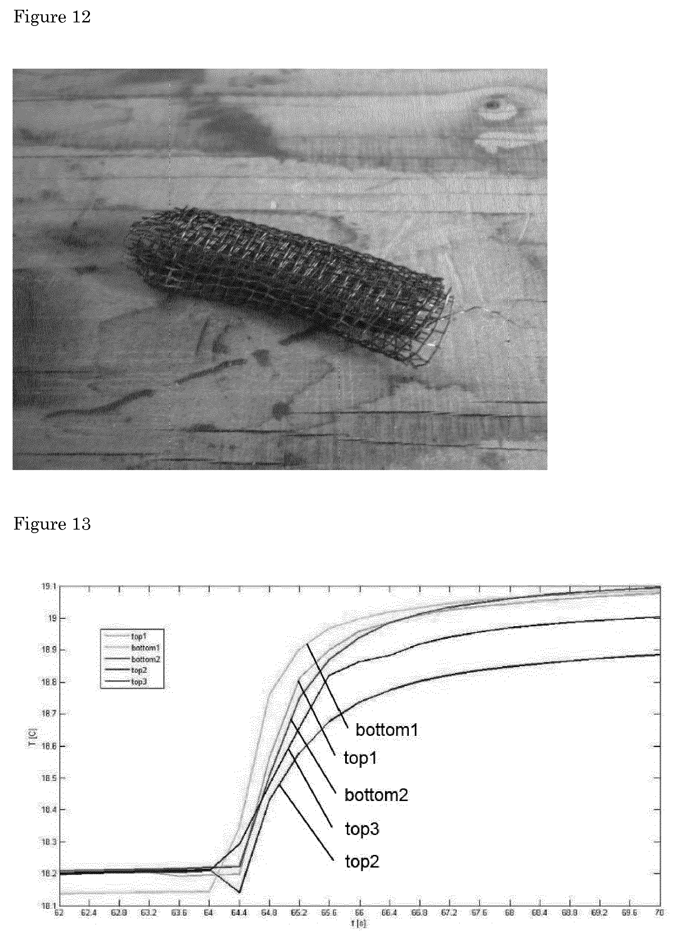

A stack of Gd plates, 15 mm × 40 mm × 1 mm (width × height × thickness) 1 mm distance between each plate, were deployed vertical to the copper wall (figure 10) and built with 0.1 mm copper foil (photo in figure 11). The upper part (around 30 mm height) was filled again with a roll of copper mesh (photo in figure 12). After filling with 1.5 ml acetone it was evacuated and tested again by magnetising (results in figure 13).

The results were much better than all the systems before. The temperatures changed 0.7 to 0.8 K in 1 s. All the spots of measurements reacted in the same way: fast and with a high delta T. This means that a much better evaporation than before was achieved, because of more gadolinium plates and a better internal structure of these plates. This results now allows adding a water flow outside in a way to transfer the heat with a reasonable temperature difference.

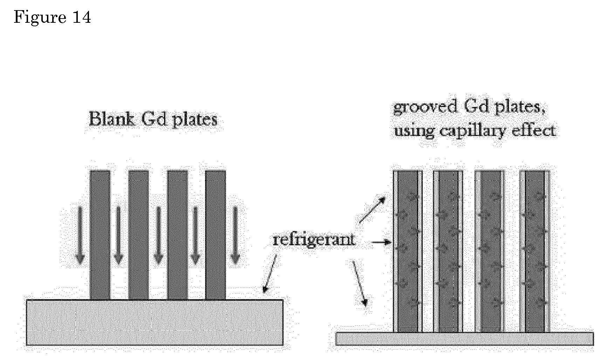

In order to further improve wetting of the entire surface for all Gd plates, it is useful to groove the plates and to make use of the capillary effect. Figure 14 depicts the advantage of grooving (arrows describe the heat flow). In this exemplary figure, the plates have grooves parallel to the 40 mm edge.

**Claims**

1. A method of heat exchange, comprising

    - magnetising or demagnetising a magnetocaloric material so as to change the temperature of a first heat transfer fluid that is in heat exchanging contact with the magnetocaloric material,
    - using the temperature change of the first heat transfer fluid to create a flow of first heat transfer fluid between the magnetocaloric material and a separation wall and thereby changing the temperature of the separation wall;
    - contacting a second heat transfer fluid with the separation wall and thereby changing the temperature of the second heat transfer fluid,

wherein the separation wall defines at least part of a wall of a closed container comprising the magnetocaloric material and the first heat transfer fluid, wherein the second heat transfer fluid is in heat exchanging contact with surface of the separation wall at the exterior of the closed container, and wherein said closed container is under a vacuum limited to the vapour pressure of the first heat transfer liquid.

2. A method according to claim 1, wherein said flow of first heat transfer fluid between the magnetocaloric material and the separation wall comprises evaporation and/or condensation of first heat transfer fluid.

3. A method according to claim 1 or 2, wherein the first heat transfer fluid comprises one or more selected from the group consisting of acetone, methanol, ethanol, and hydrochlorofluorocarbons, preferably from the group consisting of acetone, methanol, and ethanol.

4. A method according to any one of claims 1-3, wherein the heat exchanging contact between the first heat transfer fluid and the magnetocaloric material comprises wetting of the magnetocaloric material by first heat transfer fluid, preferably through capillary forces.

5. A method according to any one of claims 1-4, wherein the magnetocaloric material is present in the form of plates or in the form of a powder.

6. A method according to any one of claims 1-5, wherein said magnetocaloric material and said separation wall are chemically inert to the first heat transfer liquid.

7. A method according to any one of claims 1-6, wherein said separation wall consists of a material having a specific heat capacity at 25 °C of 800 J/kg·K or less, preferably 600 J/kg·K or less, more preferably 100-450 J/kg·K.

8. A method of heat exchange according to claim 1, comprising

   - magnetising the magnetocaloric material so as to increase the temperature of the first heat transfer fluid,
   - creating a flow of first heat transfer fluid from the magnetocaloric material towards the separation wall and thereby decreasing the temperature of the separation wall;
   - contacting the second heat transfer fluid with the separation wall and thereby decreasing the temperature of the second heat transfer fluid.

9. A method of heat exchange according to claim 1, comprising

   - demagnetising the magnetocaloric material so as to decrease the temperature of the first heat transfer fluid,
   - creating a flow of first heat transfer fluid from the separation wall towards the magnetocaloric material and thereby increasing the temperature of the separation wall,
   - contacting the second heat transfer fluid with the separation wall and thereby increasing the temperature of the second heat transfer fluid.

10. Heat exchanging module, preferably for performing a method according to any one of claims 1-9, comprising a closed container comprising a magnetocaloric material in heat exchanging contact with a first heat transfer liquid, said closed container having a wall, wherein a separation wall defines at least part of said wall, wherein said container is under a vacuum limited to the vapour pressure of the first heat transfer liquid.

11. Heat exchanging module according to claim 10, wherein the first heat transfer fluid comprises one or more selected from the group consisting of acetone, methanol, ethanol, and hydrochlorofluorocarbons, preferably from the group consisting of acetone, methanol, and ethanol.

12. Heat exchanging module according to claim 10 or 11, wherein the magnetocaloric material is present in the form of plates, grains, powder, or a specifically engineered structure.

13. Heat exchanging module according to claim 12, wherein said plates have capillary grooves.

14. Cooling or heating device comprising a heat exchanging module according to any one of claims 10-13.

Figure 1

Figure 2

Figure 3

Figure 4

Volume: Total displacement (mm)   Volume Deformation: Displacement field

Figure 5

Figure 6

A

B

Figure 7

Figure 8

Figure 9

A

B

C

Figure 10

Figure 11

Figure 12

Figure 13

Figure 14

Blank Gd plates

grooved Gd plates,
using capillary effect

refrigerant →

Europäisches
Patentamt

European
Patent Office

Office européen
des brevets

# EUROPEAN SEARCH REPORT

Application Number

EP 16 17 4388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2014 010476 B3 (FRAUNHOFER GES ZUR FÖRDERUNG DER ANGEWANDTEN FORSCHUNG E V [DE]) 24 December 2015 (2015-12-24) | 1,2, 4-10, 12-14 | INV. F25B21/00 F25B23/00 |
| Y | * the whole document * | 3,11 | F28D15/02 |
| Y,D | US 2004/182086 A1 (CHIANG HSU-CHENG [TW] ET AL) 23 September 2004 (2004-09-23) * page 3, paragraph 0036 - page 3, paragraph 0036 * | 3,11 | |
| A | FR 2 525 748 A1 (HITACHI LTD [JP]) 28 October 1983 (1983-10-28) * page 2, line 31 - page 8, line 12; figures 5,6 * | 1-14 | |

TECHNICAL FIELDS SEARCHED (IPC)

F25B
F28D

The present search report has been drawn up for all claims

| Place of search | Date of completion of the search | Examiner |
|---|---|---|
| Munich | 14 December 2016 | Weisser, Meinrad |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 17 4388

This annex lists the patent family members relating to the patent documents cited in  the above-mentioned European search report.
The members are as contained in the European Patent Office EDP file on
The European Patent Office is in no way liable for these particulars which are merely given for the purpose of information.

14-12-2016

| Patent document cited in search report | Publication date | Patent family member(s) | Publication date |
|---|---|---|---|
| DE 102014010476 B3 | 24-12-2015 | DE 102014010476 B3<br>WO 2016008732 A1 | 24-12-2015<br>21-01-2016 |
| US 2004182086 A1 | 23-09-2004 | TW 575158 U<br>US 2004182086 A1 | 01-02-2004<br>23-09-2004 |
| FR 2525748 A1 | 28-10-1983 | DE 3314472 A1<br>FR 2525748 A1<br>JP H0357389 B2<br>JP S58184471 A<br>US 4457135 A | 03-11-1983<br>28-10-1983<br>30-08-1991<br>27-10-1983<br>03-07-1984 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040182086 A
- US 4642994 A
- US 6446441 B
- WO 2014064186 A

**Non-patent literature cited in the description**

- **PECHARSKY et al.** *Int. J. Refrig.,* 2006, vol. 29 (8), 1239-2149
- **KITANOVSKI et al.** *Int. J. Refrig.,* 2006, vol. 29 (1), 3-21
- **SMITH et al.** Fysische Transportverschijnselen I. *Delftse Uitgevers Maatschappij, Delft,* 1984
- **PLAWSKY et al.** *Nanosc. Microsc. Therm.,* 2014, vol. 18, 251-269
- **HEINIGER et al.** Industrietauglicher Prototyp eines thermomagnetischen Motors (TMM) zur Stromerzeugung - Schlussbericht. *Schweizerische Eidgenossenschaft, Bundesamt fur Energie,* 2015